(19) Europäisches Patentamt

European Patent Office

Office européen des brevets

(11) **EP 0 616 445 B1**

(12) **FASCICULE DE BREVET EUROPEEN**

(45) Date de publication et mention
de la délivrance du brevet:
**31.05.2000 Bulletin 2000/22**

(51) Int. Cl.⁷: **H04L 5/06**, H04B 7/26

(21) Numéro de dépôt: **94460008.9**

(22) Date de dépôt: **17.03.1994**

(54) **Système de radiocommunication numérique bidirectionnel multiporteuse, station mobile et station de base correspondantes**

Duplexmehrträgerbinäre Funkübertragungsanordnung, entsprechende Mobile- und Feststation

Duplex multicarrier digital radio communication system, mobile station and base station for it

(84) Etats contractants désignés:
**DE GB IT**

(30) Priorité: **17.03.1993 FR 9303280**

(43) Date de publication de la demande:
**21.09.1994 Bulletin 1994/38**

(73) Titulaires:
- **FRANCE TELECOM
  75015 Paris (FR)**
- **TELEDIFFUSION DE FRANCE SA
  75932 Paris Cédex 15 (FR)**

(72) Inventeurs:
- **Pommier, Daniel
  F-35000 Rennes (FR)**
- **Le Floch, Bernard
  F-35000 Rennes (FR)**
- **Vinatier, Claude
  F-35700 Rennes (FR)**
- **Lemesle, Jean-Michel
  F-35700 Rennes (FR)**

(74) Mandataire: **Vidon, Patrice
Cabinet Patrice Vidon,
Immeuble Germanium,
80, Avenue des Buttes-de-Coesmes
35700 Rennes (FR)**

(56) Documents cités:
**EP-A- 0 499 560          EP-A- 0 529 421
US-A- 4 392 242**

**Description**

Le domaine de l'invention est celui de la radiocommunication numérique entre des stations d'émission et de réception géographiquement distinctes. Plus précisément, l'invention concerne un système de radiocommunication dans lequel une station de base peut gérer des échanges de données par voie hertzienne avec plusieurs stations distantes, et en particulier des stations mobiles.

On connaît déjà plusieurs systèmes de radiocommunication avec des mobiles mettant en oeuvre des structures de ce type. C'est notamment le cas des réseaux cellulaires tels que le système européen GSM ("Groupe Spécial Mobiles") actuellement disponible en Europe.

Le système GSM repose en effet sur une approche cellulaire : le territoire géographique à couvrir en petites portions, ou cellules, desservies chacune par une ou plusieurs stations de base. Ce découpage en cellules permet d'optimiser l'utilisation du spectre radioélectrique, plusieurs cellules pouvant utiliser la même portion de spectre.

Chaque station de base peut communiquer par voie hertzienne avec une pluralité de mobiles circulant dans sa cellule. Par ailleurs, les stations de base sont reliées à un centre de commutation qui assure les connexions entre un mobile et un terminal distant (qui est par exemple un abonné du réseau commuté ou un autre mobile).

Les communications gérées par une station de base sont réparties sur des canaux fréquentiels (canaux de trafic). Chaque canal de trafic est ensuite partagé en multiplex temporel par plusieurs stations mobiles. Un algorithme de gestion de sauts de fréquence entre les différents canaux fréquentiels permet d'améliorer la robustesse du système vis-à-vis du phénomène d'évanouissement ("fading", en anglo-saxon).

Ce phénomène d'évanouissement est en effet un problème crucial, notamment en milieu urbain. Plus précisément, on sait que dans des conditions de multipropagation (une station recevant simultanément plusieurs champs en provenance d'un même émetteur) il peut se produire des évanouissements sélectifs (processus de Rayleigh). La technique du saut de fréquence permet de limiter les effets de ces évanouissements, en changeant régulièrement de fréquence d'émission. Toutefois, cette technique présente un inconvénient majeur, à savoir la complexité des stations, et notamment des stations mobiles, celles-ci devant en permanence modifier les fréquences de modulation et de démodulation, avec toutes les contraintes de réglage de l'accord que cela peut poser.

Par ailleurs, il apparaît que, dans certaines conditions de réception difficiles (multitrajets, masquage, parasites, brouillage, conditions atmosphériques, ...), la robustesse de ce système est insuffisante pour permettre un échange de données dans de bonnes conditions. Cela peut conduire à des interruptions momentanées (éventuellement acceptables dans le cas de signaux de parole, mais non dans le cas de signaux de données), et même à des coupures de la communication en cours.

Ces problèmes imposent des contraintes très importantes en ce qui concerne l'implantation de l'infrastructure des réseaux cellulaires, c'est-à-dire, en particulier, la détermination de l'emplacement géographique des antennes d'émission/réception des stations de base, des caractéristiques des émetteurs associés, de façon à répondre à un certain nombre de contraintes (couverture géographique, débit, ...). Notamment, l'antenne doit être placée sur un site élevé, pour limiter les effets de masquage, mais également être sensiblement centrée dans la cellule, de façon à couvrir suffisamment celle-ci tout en évitant que cette couverture déborde sur les cellules voisines ...

Ces contraintes sont d'autant plus cruciales que les choix d'implantation sont définitifs, ou à tout le moins difficiles à modifier, du fait qu'ils influent sur les cellules voisines. Cela peut poser des problèmes lorsque l'environnement évolue (construction d'une route, d'un immeuble, ...).

L'invention a notamment pour objectif de pallier ces inconvénients de l'état de la technique.

Plus précisément, un objectif de la présente invention est de fournir un système de radiocommunication numérique présentant une bonne robustesse vis-à-vis des mauvaises conditions de transmission. En particulier, l'invention a pour objectif de fournir un tel système capable de fonctionner en présence de multitra-jets, de brouillage, d'évanouissements, ....

Un autre objectif de l'invention est de fournir un tel système, dans lequel le rapport débit/bande passante est optimisé.

L'invention a encore pour objectif de fournir un tel système de radiocommunication, dans lequel l'ingénierie d'implantation du réseau est simplifiée, notamment en ce qui concerne l'emplacement des antennes des stations de base.

Un objectif particulier de l'invention est également de fournir un tel système dans lequel la couverture géographique d'une station de base puisse être aisément modifié au cours du temps, par exemple en fonction de l'évolution de son environnement.

Ces objectifs, ainsi que d'autres qui apparaîtront par la suite, sont atteints selon l'invention à l'aide d'un système de radiocommunication numérique bidirectionnel entre au moins une station mobile et au moins une station de base, dans lequel chacune desdites stations mobiles comprend :

- des premiers moyens de codage canal délivrant une première série de premiers symboles de données successifs,

chacun desdits premiers symboles de données étant formé d'une pluralité de fréquences porteuses orthogonales modulées chacune par un élément de données d'un premier signal source, et

- des premiers moyens d'émission assurant la modulation desdits premiers symboles de données à une première fréquence de modulation et la diffusion des symboles modulés à l'aide d'au moins une première antenne ;

et chacune desdites stations de base comprend :

- des seconds moyens de codage canal délivrant une seconde série de seconds symboles de données successifs, chacun desdits seconds symboles de données étant formé d'une pluralité de fréquences porteuses orthogonales modulées chacune par un élément de données d'un second signal source, et
- des seconds moyens d'émission assurant la modulation desdits seconds symboles de données à une seconde fréquence de modulation ;

chacune desdites stations de base coopérant avec au moins deux bornes d'émission et de réception hertziennes spatialement réparties, chacune desdites bornes étant reliée de façon bidirectionnelle à ladite station de base, de façon qu'un signal issu de ladite station de base soit émis vers lesdites stations mobiles par chacune desdites bornes, et qu'un signal reçu par ladite station de base corresponde à la somme des signaux reçus par chacune desdites bornes.

Ainsi, l'invention repose sur l'utilisation d'une modulation COFDM (Coded Orthogonal Frequency Division Multiplex (Multiplexage de Fréquences Orthogonales Codées)) dans les deux sens de transmission, d'une station mobile vers une station de base (voie montante) et d'une station de base vers une station mobile (voie descendante).

La technique COFDM est déjà connue dans le domaine de la radiodiffusion numérique. Elle a notamment pour avantage, outre une très bonne robustesse vis-à-vis des diverses perturbations, et en particulier des multitrajets, de permettre la couverture d'un territoire géographique important en utilisant une pluralité d'émetteurs fonctionnant à une unique fréquence de modulation (réseau monofréquence).

L'utilisation de cette technique COFDM dans un système de radiocommunication n'est toutefois pas évidente pour l'homme du métier, pour de nombreuses raisons :

- le COFDM est généralement utilisé pour réaliser des réseaux monofréquences, alors que la radiocommunication repose sur une approche cellulaire, de façon à optimiser le nombre de communications possibles ;
- le COFDM repose sur un codage relativement complexe, qui semble incompatible à première analyse avec des stations mobiles ;
- un système de radiocommunication doit permettre que plusieurs communications cohabitent simultanément, c'est-à-dire permettre que plusieurs mobiles émettent des signaux distincts. Or, si les systèmes COFDM connus sont effectivement prévus pour transmettre simultanément plusieurs signaux indépendants, ceux-ci sont entrelacés en temps et en fréquence. A nouveau, à première vue, cet entrelacement semble incompatible avec une émission issue de plusieurs stations mobiles émettant chacune une portion du signal complet.

Ainsi qu'on le verra par la suite, l'invention montre que, cependant, le COFDM est tout à fait utilisable dans un système de radiocommunication.

Par ailleurs, la caractéristique essentielle de l'invention est d'associer à chaque station de base au moins deux antennes d'émission/réception (bornes) réparties géographiquement. Cette approche est tout à fait nouvelle dans le domaine des radiocommunications (le principe à la base des réseaux cellulaires étant au contraire de faire en sorte que deux antennes n'utilisent une même fréquence que lorsque l'on est assuré que les champs couverts par les deux antennes ne se chevauchent pas). Elles présentent de nombreux avantages, et notamment :

- la pluralité d'antennes permet de garantir que tout mobile présent dans la cellule (zone de couverture de la station de base) reçoit des signaux d'au moins une antenne (et réciproquement), quelle que soit sa position géographique ;
- la plupart du temps, une station mobile reçoit des signaux émis par au moins deux antennes. On créé ainsi des échos artificiels, qui permettent d'améliorer la qualité du décodage ;
- la puissance du signal émis est distribuée de façon sensiblement homogène sur l'ensemble du territoire couvert ;
- il est aisé d'adapter cette couverture géographique à différentes contraintes (environnement, forme imposée de la cellule), et de la modifier en fonction des évolutions de l'environnement, par ajout d'une antenne supplémentaire ;
- la pluralité d'antennes assure, en réception de la voie montante et en émission de la voie descendante, une diversité d'espace, qui correspond, lorsque plusieurs antennes reçoivent le même signal, à la création d'échos artificiels.

Avantageusement, ledit signal reçu par ladite station de base est organisé en trames successives comprenant chacune un nombre prédéterminé de premiers symboles de données, chaque trame étant découpée en intervalles de temps comprenant chacun au moins un symbole de données, et il est affecté à chacun desdits mobiles au moins un intervalle de temps, ledit mobile n'émettant des données que durant les intervalles de temps qui lui sont affectés.

En d'autres termes, on met en oeuvre, dans le sens montant, un accès multiple à répartition dans le temps (AMRT) (dans le cas multiusagers, c'est-à-dire lorsque plusieurs mobiles cohabitent).

De façon préférentielle, ledit signal issu de chacune desdites stations de base comprend des données de synchronisation, et chacun desdits mobiles comprend des moyens de contrôle de l'instant d'émission desdits premiers symboles, en fonction desdites données de synchronisation.

Dans un mode de réalisation avantageux de l'invention, un intervalle de garde est ménagé entre chacun desdits premiers symboles de données, de façon à absorber les écarts de synchronisation entre deux stations mobiles.

Un tel intervalle de garde a déjà été proposé pour éviter les phénomènes d'interférences intersymboles. Il répond selon l'invention à un autre problème, à savoir les écarts de synchronisation qui peuvent apparaître entre deux stations mobiles (vu de la station de base), par exemple parce que l'une des stations mobiles est proche d'une antenne, et l'autre éloignée (temps de transmission différents).

De façon avantageuse, lesdits seconds moyens de codage canal effectuent un entrelacement en temps et en fréquence desdits éléments de données dudit second signal source, et lesdits premiers moyens de codage canal effectuent un entrelacement uniquement en fréquence desdits éléments de données dudit premier signal source.

Ainsi, selon l'invention, le codage utilisé n'est pas le même dans les deux sens de transmission (contrairement aux systèmes de radiocommunication connus). Au contraire, ce codage est adapté aux particularités de chaque sens de transmission. En particulier, du fait de la répartition dans le temps dans le sens montant, on n'effectue pas d'entrelacement en temps. Il n'est donc pas nécessaire, pour effectuer le décodage, de réunir les données contenues dans plusieurs intervalles de temps successifs.

Dans un mode de réalisation particulier de l'invention, chacun desdits intervalles de temps comprend une série d'au moins deux premiers symboles de données consécutifs, et le premier symbole de ladite série est un symbole de référence de démodulation, permettant d'effectuer dans une station de base une démodulation différentielle des symboles suivant de ladite série.

Il est en effet nécessaire que chaque station mobile fournisse sa propre référence de démodulation, dans le cas d'une démodulation différentielle. On peut également mettre en oeuvre, dans l'un au moins des sens de transmission, une démodulation cohérente.

De façon préférentielle, lesdites bornes d'émission et de réception sont implantées de façon que les durées de transmission d'un signal entre chacune desdites bornes et la station de base associée soient différentes.

Ces durées de transmission peuvent dépendre de l'emplacement des bornes (temps de transmission entre la borne et la station de base) et/ou de l'utilisation de retards différents (éventuellement variables dans le temps) pour chaque borne.

Avantageusement, l'écart entre deux desdites durées de transmission est supérieur à l'inverse de la largeur de bande du signal émis par lesdites stations mobiles.

Ainsi le retard appliqué est supérieur à la capacité de résolution en temps de la station de base, ce qui garantit la dissociation des énergies provenant des différentes antennes.

On a décrit ci-dessus les communications entre une station de base et plusieurs mobiles. Il est clair toutefois que le système de l'invention peut être de façon triviale étendu aux communications entre deux mobiles (dépendant ou non de la même station de base) ou entre un mobile et tout autre terminal. Classiquement, chaque station de base est reliée à un centre de commutation (éventuellement via un ou plusieurs niveaux intermédiaires, formant un réseau arborescent) qui assure les connexions nécessaires.

Par ailleurs, l'invention ne se limite pas uniquement à la radiotéléphonie vers des mobiles. En effet, la bonne robustesse et le débit important offerts par la technique COFDM permettent de transmettre des données et/ou des images. De nombreuses applications informatiques, télématiques, multimédias peuvent donc être envisagées.

Ainsi, le terme "station mobile" est ici utilisé pour simplifier la compréhension de l'invention, par rapport aux systèmes connus (GSM par exemple), mais ne doit pas être limité stricto sensu à des terminaux déplaçables ("mobiles"). Il peut également s'agir d'éléments fixes, ou simplement susceptibles d'être déplacés.

Par exemple, l'invention permet de mettre en oeuvre des réseaux locaux, dans lesquels une station de base contrôle (par voie hertzienne) plusieurs terminaux téléphoniques et/ou informatiques. L'implantation d'un tel réseau est particulièrement simple (absence de câblage), et ce réseau est aisément évolutif (ajout ou suppression d'un terminal).

D'autres caractéristiques et avantages de l'invention apparaîtront à la lecture de la description suivante d'un mode de réalisation préférentiel de l'invention, donné à titre d'exemple illustratif et non limitatif, et des dessins annexés, dans lesquels :

- la figure 1 est un exemple de réseau de radiocommunication cellulaire selon l'invention, dans lequel une station de base communique avec plusieurs stations mobiles dans chaque cellule ;

- la figure 2 est un schéma synoptique global de la chaîne de transmission du système de la figure 1 dans le sens descendant (station de base vers station mobile) ;
- la figure 3 illustre la structure d'une trame du signal transmis par la station de base de la figure 2 ;
- la figure 4 est un schéma synoptique global de la chaîne de transmission du système de la figure 1 dans le sens montant (station mobile vers station de base);
- la figure 5 illustre la structure d'une trame du signal reçu par la station de base de la figure 4, dans le cas d'une répartition AMRT ;
- la figure 6 présente plus en détail la structure de l'ensemble formé par une station de base et les bornes d'émission/réception associées selon l'invention;
- la figure 7 présente un autre mode de mise en oeuvre de l'invention, sous la forme d'un réseau local ;
- la figure 8 illustre un autre mode de réalisation de l'ensemble comprenant la station de base et les bornes d'émission/réception, dans lequel le coupleur est diffus.

L'invention concerne donc un nouveau système de radiocommunication avec des mobiles, mettant en oeuvre une modulation multiporteuse dans les deux sens de communication.

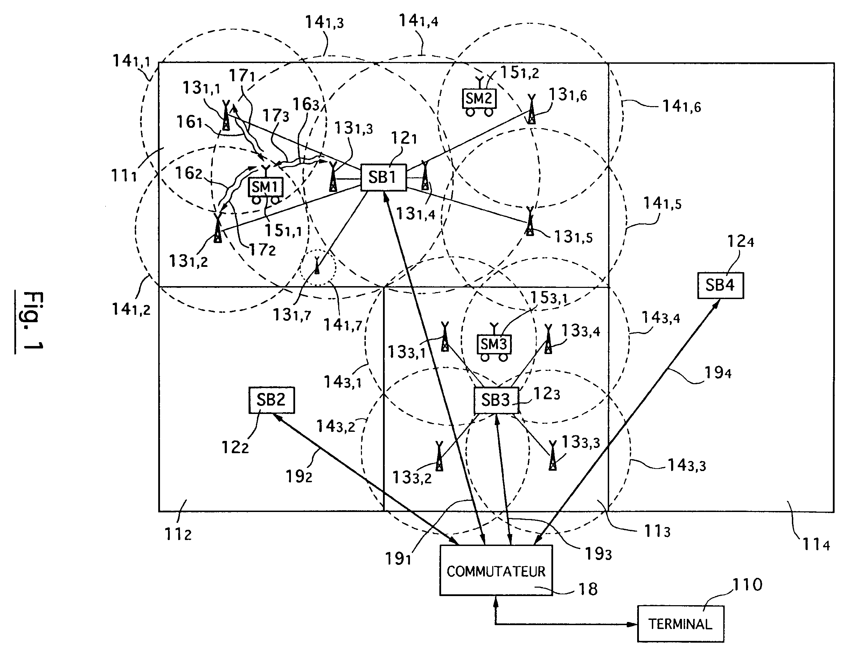

La figure 1 présente un exemple d'implantation d'un réseau de radiocommunication cellulaire selon l'invention.

Ainsi qu'on l'a déjà précisé, la caractéristique principale de l'invention est d'associer à chaque station de base (c'est-à-dire, dans le cas d'un réseau cellulaire, à chaque cellule) une pluralité de bornes d'émission/réception. Cette approche nouvelle permet notamment d'une part de profiter des avantages des systèmes multiporteuses monofréquences, et d'autre part de simplifier l'implantation et la gestion de l'infrastructure d'un réseau.

On a représenté en figure 1 quatre cellules contiguës $11_1$ à $11_4$, contrôlées chacune par une station de base (SB) $12_1$ à $12_4$. Chaque station de base est associée à au moins deux bornes d'émission/réception fonctionnant toutes aux mêmes fréquences d'émission et de réception, qui ne sont représentés sur la figure 1 que pour les cellules $11_1$ et $11_3$ :

- cellule $11_1$ : bornes d'émission/réception $13_{1,1}$ à $13_{1,7}$, présentant respectivement les couvertures en émission et en réception $14_{1,1}$ à $14_{1,7}$ ;
- cellule $11_3$ : bornes d'émission/réception $13_{3,1}$ à $13_{4,4}$, présentant respectivement les couvertures en émission et en réception $14_{3,1}$ à $14_{4,4}$.

Chaque borne d'une même cellule fonctionne aux mêmes fréquences d'émission et de réception. En revanche, classiquement, deux cellules voisines utilisent des fréquences différentes.

Une première caractéristique importante de l'invention apparaît directement à la vue de la figure 1 la forme et la taille des cellules $11_1$ à $11_4$ peuvent être quelconques, et différentes d'une cellule à l'autre.

En effet, dans les systèmes classiques, chaque cellule ne comprend qu'une unique antenne. La forme des cellules est donc imposée : il faut que le périmètre de celles-ci soit sensiblement à une même distance d'un point central (l'antenne). En d'autres termes, les cellules devraient être, idéalement, circulaires, et sont dans la pratique, hexagonales (cas du GSM).

Au contraire, selon l'invention, la forme peut être quelconque, et par exemple rectangulaire (cellules $11_1$ et $11_4$). Il est ainsi possible d'adapter la forme des cellules en fonction des besoins et des contraintes, en plaçant de façon adéquate les bornes $13_{1,1}$ à $13_{1,7}$. La cellule $11_1$ a la forme de l'union (au sens mathématique) de l'ensemble des couvertures $14_{1,1}$ à $14_{1,7}$.

Cela permet par exemple d'adapter une cellule aux contraintes géographiques (cas d'une île ...), du réseau routier (cas d'une autoroute dans une zone inhabitée ...), des zones urbaines (quartiers d'une ville ...). Par ailleurs, la forme d'une cellule peut être modifiée, par simple ajout de bornes. L'extension du réseau ne repose donc pas obligatoirement sur l'ajout d'une nouvelle cellule. Par exemple, la cellule $11_1$ a pu être étendue sur sa gauche par l'ajout des bornes $13_{1,1}$ et $13_{1,2}$ (cas de l'extension d'un nouveau quartier, de la réalisation d'une nouvelle route ...).

Cette souplesse est permise par une caractéristique essentielle du codage COFDM, qui permet de tirer avantage des trajets multiples. Cela permet de créer, vu des mobiles, des réseaux de diffusion monofréquences, c'est-à-dire des réseaux comprenant des émetteurs cocanaux émettant tous sur la même fréquence de modulation, chaque émetteur étant vu comme un écho.

Ainsi, la station mobile (SM) $15_{1,1}$ reçoit les contributions $16_1$ et $16_2$ et $16_3$ des bornes $13_{1,1}$ et $13_{1,2}$ et $13_{1,3}$ respectivement.

Inversement, la station de base $12_1$ reçoit des signaux émis par la station mobile $15_{1,1}$ par l'intermédiaire des trois bornes $13_{1,1}$ et $13_{1,2}$ et $13_{1,3}$. La station de base $12_1$ forme donc dans le sens montant un récepteur à diversité spatiale (plusieurs antennes de réception réparties). A nouveau, on bénéficie ainsi des échos produits par les différen-

tes contributions $17_1$ et $17_2$ et $17_3$.

Cette caractéristique permet également d'éliminer les zones d'ombre dans la couverture d'une cellule. Par exemple, si la zone $14_{1,7}$ n'est pas couverte, une borne $13_{1,7}$ peut être ajoutée, pour supprimer la zone d'ombre. Il est à noter que cet ajout peut être fait à n'importe quel moment, et par exemple lorsqu'un nouvel immeuble a été construit, masquant la zone $14_{1,7}$.

Par ailleurs, la surface des cellules peut être adaptée à différentes autres contraintes, et notamment au débit à écouler. En effet, chaque station de base peut gérer un nombre prédéfini de communications. Dans une zone à haute densité de population (par exemple le centre d'une ville) on pourra donc définir des cellules de tailles réduites $11_2$, $11_3$. Inversement, dans les zones non habitées, ou peu habitées, ou ne portant pas d'axes routiers importants, la surface des cellules pourra être augmentée (en fonction de la probabilité du nombre d'appels simultanés).

Le système décrit ci-dessus permet tout d'abord d'établir des communications entre deux mobiles $15_{1,1}$ et $15_{1,2}$ circulant dans la même cellule $11_1$. Ce cas correspond également au mode de réalisation simplifiée où il n'existe qu'une station de base, et donc qu'une cellule (cas d'un réseau couvrant simplement une ville ou un site privé). La communication est alors directement gérée par la station de base $12_1$. (Elle peut également transiter par le commutateur 18, comme dans le cas suivant).

Lorsqu'une communication doit être établie entre deux mobiles $15_{1,1}$ et $15_{3,1}$ circulant dans deux cellule distinctes $11_1$, $11_3$, elle transite par un commutateur 18. Chaque station de base $12_i$ est reliée à ce commutateur 18, par exemple par l'intermédiaire d'une ligne spécialisée $19_i$ correspondante. Eventuellement, le réseau ainsi constitué peut comporter une arborescence à plusieurs niveaux, de même que le GSM (chaque station de base étant reliée à un contrôleur de stations de base, lui-même relié à un centre de commutation).

Des communications peuvent également être établies, via le commutateur 18, avec tout autre type de terminal 110 (téléphone du réseau commuté, centre serveur informatique, terminal informatique, télécopieur ...).

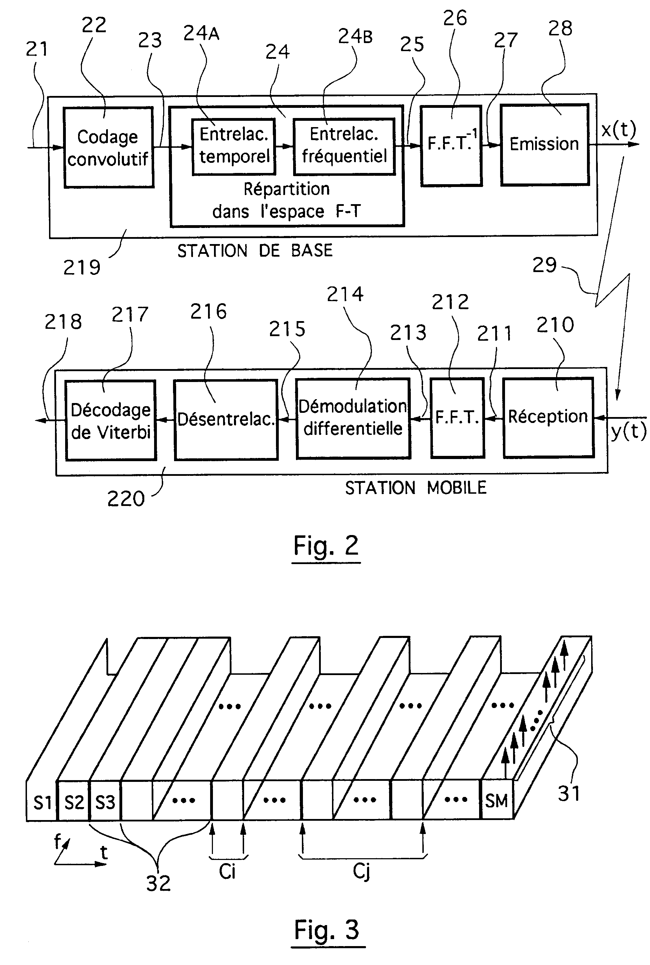

La figure 2 illustre la chaîne de transmission dans le sens descendant, c'est-à-dire d'une station de base 12, vers une station mobile $15_{1,1}$. Cette chaîne de transmission est similaire à celle mise en oeuvre dans le cas de la radiodiffusion COFDM déjà connue. On en rappelle toutefois ci-dessous, à titre d'exemple (d'autres types de codage pouvant bien sûr être mis en oeuvre), les caractéristiques essentielles.

Le système de diffusion numérique connu sous le nom de système COFDM (Coded Orthogonal Frequency Division Multiplex (multiplexage de fréquences orthogonales codées)) est décrit notamment dans le brevet français FR-86 09622 déposé le 2 juillet 1986 et dans le document "Principes de modulation et de codage canal en radiodiffusion numérique vers les mobiles" (M. Alard et R. Lassalle ; Revue de l'U.E.R, n° 224, août 1987, pp. 168-190).

Il repose notamment sur la combinaison de deux principes essentiels.

Le premier principe est la répartition de l'information à transmettre sur un grand nombre de porteuses modulées chacune à un faible débit, afin de réduire l'effet de sélectivité du canal de transmission (signal COFDM).

Le second principe du système COFDM consiste à corréler par un procédé de codage des éléments d'information consécutifs (codage canal) et à les transmettre en des points distants du domaine temps-fréquence (technique de l'entrelacement en temps et en fréquence). L'éloignement de ces points est choisi de façon à assurer l'indépendance statistique entre deux éléments successifs d'un signal source.

Le codage canal met en oeuvre un code convolutif. Bien que l'aspect codage canal ne se rapporte pas directement à la présente invention, on en décrit brièvement le principe, afin de présenter complètement un exemple de système de radiodiffusion pouvant mettre en oeuvre le procédé de l'invention. Il s'agit bien sûr d'un simple exemple, non limitatif.

Le procédé de modulation proprement dit de ce système connu permet de s'affranchir des problèmes liés à la sélectivité en fréquence du canal. Il consiste à assurer la répartition d'éléments numériques constitutifs du signal de données dans l'espace fréquence-temps et à émettre simultanément des jeux d'éléments numériques sur une pluralité de voies de diffusion parallèles au moyen d'un multiplex de fréquences utilisant des porteuses orthogonales. En particulier, ce type de modulation permet d'éviter que deux éléments successifs du train de données soient émis à la même fréquence.

La figure 2 est donc un schéma synoptique d'une chaîne d'émission (station de base 219) et de réception (station mobile 220) d'un système mettant en oeuvre la technique COFDM.

Ainsi, les données numériques source 21 à transmettre sont soumises à un codage convolutif 22. Le principe général d'un tel code est d'associer à chaque valeur source une valeur codée dépendante de cette valeur source et d'au moins une des valeurs qui la précède. Du fait du lien ainsi créé entre les valeurs codées, il est alors possible, au décodage, de reconstruire la séquence des valeurs source même lorsqu'une valeur codée reçue est fausse, à l'aide d'un décodage à maximum de vraisemblance, tel qu'un décodage de Viterbi à décision douce (c'est-à-dire un décodage délivrant une estimation de la valeur reçue et une pondération représentative de la confiance que l'on peut accorder à cette estimation).

Avantageusement, un code externe du type Reed-Solomon ou CSRS (Cyclotomatically Shortened Reed Solomon (code de Reed Solomon cyclotomatiquement raccourci)) peut être concaténé au code convolutif.

Les données source peuvent bien sûr être de tout type, qu'il s'agisse de signaux sonores, de signaux d'images ou de signaux de données. Elles peuvent de plus correspondre à plusieurs sources d'origines distinctes, émises simultanément.

Dans le cas de l'invention, il s'agit essentiellement de données correspondant à plusieurs communications. Toutefois, il est tout à fait envisageable que d'autres informations soient conjointement transportées (informations de trafic, météorologiques, de radiolocalisation, ...).

Comme on l'a déjà précisé, le système COFDM repose sur l'utilisation simultanée d'une pluralité de fréquences porteuses émises simultanément. Le nombre N de porteuses peut être quelconque. Il est classiquement de l'ordre de quelques centaines (il pourrait également être de l'ordre de quelques unités). Chacune de ces porteuses est modulée à un faible débit (par rapport au débit nécessaire pour un système monoporteuse correspondant). Cela permet de réduire l'effet de sélectivité du canal.

Le signal global émis est donc un signal large bande (occupant par exemple une bande de quelques Mégahertz).

Cette bande large est un avantage, dans le cas de systèmes conçus pour tirer parti des trajets multiples, tel que le COFDM. En effet, du fait de l'étalement de la réponse du canal de transmission, il est très improbable qu'un évanouissement profond affecte simultanément l'ensemble du signal.

A titre d'exemple, dans une bande de fréquence de 8 MHz, on peut définir 512 fréquences porteuses séparées de 15 625 Hz. Parmi celles-ci 448 sont utilisables, après élimination de la fréquence centrale du spectre et des porteuses latérales (1/8e du spectre) pour tenir compte des contraintes de filtrage.

Dans ce système COFDM, et contrairement aux méthodes classiques de multiplexage en fréquence, les spectres des différentes porteuses se recouvrent mutuellement. Toutefois, le signal complet vérifie certaines conditions d'orthogonalité, permettant la séparation des informations associées aux différentes porteuses, par exemple en utilisant la technique de la transformation de Fourier (ainsi que cela est précisé plus loin). En d'autres termes, la notion d'orthogonalité des fréquences porteuses sous-entend que les spectres des porteuses peuvent se chevaucher, à la condition que, lorsque un des spectres présente sa puissance maximale, c'est-à-dire à la fréquence précise de la porteuse correspondant à ce spectre, tous les autres spectres ont une puissance nulle. Le décodage n'est donc pas perturbé si l'on considère cette fréquence précise.

L'interférence intersymbole introduite notamment par les trajets multiples lors de la transmission peut perturber cette orthogonalité. Pour éviter ce problème, on insère un intervalle de garde entre chaque symbole émis. La durée de cet intervalle de garde est choisie supérieure à l'étalement de la réponse impulsionnelle du canal.

Le module de codage 22 délivre des éléments de données codées $C_k$ 23 appartenant à un alphabet de modulation. Le choix de l'alphabet spécifie le type de modulation utilisé. Par exemple, pour une modulation à 4 états de phase (MDP4), l'alphabet utilisé est {1 + i, 1 - i, -1 + i, -1 - i}. De nombreux autres types de modulation peuvent être utilisés, tels que les modulations MDP8, 16QAM ou les modulations par codage en treillis selon la méthode d'Ungerboeck.

Les éléments de données codés 23 sont ensuite soumis à une opération 24 de répartition dans l'espace fréquence-temps, qui consiste à associer à chacune des fréquences porteuses des éléments de données sélectionnés dans la suite des données codées 23 de façon à briser, par brassage, la corrélation des distorsions subies par les échantillons transmis. Par espace temps-fréquence, on entend un ensemble de points répartis selon deux axes perpendiculaires, l'axe du temps et l'axe des fréquences. Selon l'axe des fréquences, on distingue autant de points qu'il y a de fréquences porteuses. Selon l'axe du temps, un point correspond à la durée d'un symbole.

Par exemple, cette répartition assure au minimum que deux données source successives ne soient pas transmises consécutivement et/ou sur une même fréquence porteuse. Plus généralement, l'éloignement dans l'espace temps-fréquence entre deux données codées successives est au minimum tel que l'indépendance statistique entre ces données soit assurée.

Dans la pratique, cette répartition 24 dans l'espace temps-fréquence peut correspondre à un entrelacement en temps $24_A$ consistant par exemple en une application sélective de retards de différentes durées, suivi d'un entrelacement en fréquences $24_B$, consistant en une affectation sélective des éléments de données retardés aux différentes porteuses.

Il est à noter que cet entrelacement en temps est, dans le cas de communications téléphoniques, différent de celui appliqué dans les systèmes de radiodiffusion actuellement développés (DAB (Digital Audiobroadcasting)). Plus précisément, les retards appliqués sont inférieurs, et choisis de façon à ne pas perturber la communication (du fait d'un délai trop long entre l'émission et la réception, comme cela est par exemple le cas dans les communications par satellite).

Chaque fréquence porteuse est ensuite modulée par la séquence d'éléments de données $C_k$ qui lui est destinée. Cette opération de modulation peut être effectuée par l'application d'une transformation de Fourier rapide inverse (FFT[1]) 26 sur la suite 25 d'éléments de données.

Le module de transformation inverse 26 délivre des symboles élémentaires de modulation 27 correspondant à la modulation simultanée des N fréquences porteuses et destinés chacun à être transmis pendant l'intervalle de temps $T_s = t_s + \Delta$, où $t_s$ est la durée du symbole "utile", sur laquelle portera la démodulation et où $\Delta$ représente la durée de l'intervalle de garde (par exemple : $\Delta = T_s/4$).

Ces symboles 27 sont ensuite émis, de façon classique, à l'aide d'un module d'émission 28, qui effectue notamment la conversion numérique/analogique des symboles 27, puis une transposition du signal analogique correspondant dans le domaine des radiofréquences.

Chaque symbole émis x(t) peut s'écrire :

$$x(t) = \sum_{k=0}^{N-1} Re\ (C_k \cdot e^{2i\pi f_k t}) \qquad pour\ t \in [0, T_s]$$

où $f_k = f_0 + k/t_s$
et avec :

N :    nombre de porteuses du multiplex de porteuses orthogonales ;
$f_0$ :    fréquence arbitraire ;
$C_k$ :    élément de l'alphabet de modulation.

Le signal est émis par l'ensemble des bornes associées à la station de base 219. Le canal de transmission 29 (présentant généralement des trajets multiples vu du mobile 220) est reçu dans un module de réception 210 de ce mobile, également classique.

Si l'intervalle de garde est plus long que la réponse impulsionnelle du canal, et si celui-ci varie lentement par rapport à la durée $T_s$ d'un symbole (invariance du canal pendant la durée d'un symbole), chaque symbole reçu (non affecté par l'interférence intersymbole) peut se mettre sous la forme :

$$y(t) = \sum_{k=0}^{N-1} Re\ (H_k \cdot C_k \cdot e^{2i\pi f_k t})$$

où $H_k$ représente la réponse du canal 29 à la fréquence $f_k$.

Dans le module de réception 210, le signal reçu est démodulé sur les voies en phase et en quadrature d'un oscillateur local de transposition à la fréquence $f_0 + 1/(2T)$ et échantillonné par un convertisseur analogique/numérique au rythme de 1/T, avec $T = t_s/N$.

Le signal 221 obtenu s'écrit :

$$x(nT) = (-1)^n \cdot \sum_{k=0}^{N-1} C_k \cdot H_k \cdot e^{2i\pi \frac{nk}{N}} \qquad (n = 0\ \grave{a}\ n-1)$$

$$X_k = H_k C_k = \sum_{n=0}^{N-1} (-1)^n\ x(nT) \cdot e^{-2i\pi \frac{nk}{N}}\ sur\ l'ensemble\ [(-1)^n\ x(nT)]_{n=0\ \grave{a}\ N-1}$$ e 26. Cette

Ces données 213 sont ensuite corrigées (214) (suppression du terme $H_k$) par démodulation cohérente ou différentielle. Dans le cas d'une démodulation différentielle 214, et si l'on introduit un indice temporel j sur chaque porteuse, $C_{j,k}$ est le produit d'un codage différentiel des données :

$$C_{j,k} = C_{j-1,k} \cdot D_{j,k}$$

où $D_{j,k}$ sont les données brutes. La démodulation consiste à utiliser au rang j un estimateur simplifié du canal déduit du rang j-1 :

$$\tilde{H}_{j,k} = H_{j-1,k}$$

On obtient donc les éléments de données estimés :

$$X_{j,k} \cdot X_{j-1,k}^{*} = (C_{j,k} \cdot C_{j-1,k}^{*}) \cdot (H_{j,k} \cdot H_{j-1,k}^{*}) = D_{j,k} \cdot |H_{j,k}|^{2}$$

Ces éléments de données 215 sont ensuite soumis à un module de désentrelacement 216, effectuant les opérations inverses du module 24, de façon à reconstituer l'ordre d'origine des symboles, qui sont ensuite dirigés dans un module de décodage 217, effectuant un décodage à maximum de vraisemblance a posteriori, tel qu'un décodage de Viterbi à décision douce. Dans ce module de décodage 217, le facteur multiplicatif $|H^{*}_{j,k}|$ de l'équation précédente est directement représentatif de la confiance associée à la décision.

En effet, dans la pratique, il apparaît toujours du bruit lors de la transmission des signaux. Le signal reçu doit donc alors s'écrire :

$$X_{j,k} = H_{j,k} \cdot C_{j,k} + N_{j,k}$$

où $N_{j,k}$ est un bruit gaussien complexe dont chaque composante possède une variance $\sigma^{2}_{j,k}$.

Le décodage selon le critère de maximum de vraisemblance a posteriori consiste alors à minimiser l'expression :

$$\Sigma_{j} \, \Sigma_{k} \parallel X_{j,k} - H_{j,k} \cdot C_{j,k} \parallel^{2} / (2.\sigma^{2}_{j,k})$$

Le module de décodage fournit ainsi, après un éventuel décodage du code concaténé, si un tel code a été mis en oeuvre à l'émission, le signal 218 correspondant au signal source 21.

Dans le système COFDM, les symboles transmis sont avantageusement organisés en trames de symboles. La figure 3 présente, à titre d'exemple, une telle structure. Plus précisément, la figure 3 illustre une trame constituée de M symboles successifs.

Chaque trame débute avantageusement par deux symboles particuliers S1 et S2, dont le rôle est précisé par la suite. Elle comprend ensuite un certain nombre de symboles utiles S3 à SM, comprenant chacun N porteuses orthogonales modulées 31.

Le symbole S1 est un symbole nul (aucun signal n'est émis pendant la durée de ce symbole), permettant d'une part d'effectuer une synchronisation analogique, et d'autre part d'effectuer l'analyse spectrale des brouilleurs éventuels. Le symbole S2 est un second symbole de synchronisation constitué par un multiplex de toutes les fréquences porteuses modulées par des symboles fixés (symbole de vobulation). Il permet entre autres de recaler plus précisément la synchronisation par analyse de la réponse impulsionnelle du canal. Le rôle et le mode de réalisation de ces symboles S1 et S2 sont décrits dans le brevet FR 88 15216, déposé le 18.11.88.

Bien sûr, ces symboles de synchronisation ne sont pas obligatoires vis-à-vis de l'invention.

Ce symbole S2 peut également être utilisé comme référence de phase pour la démodulation de chaque porteuse des symboles suivants, lorsque celles-ci sont modulées différentiellement.

Dans ce cas, chaque station mobile ne démodule que la séquence de symbole qui lui est destinée plus le symbole qui précède immédiatement cette séquence, (principe de la démodulation différentielle).

Le cas échéant, la trame peut également être découpée en canaux (Ci, Cj) regroupant par exemple un nombre prédéterminé de symboles, chaque canal contenant par exemple les données destinées à une station mobile donnée, ou à un groupe de stations mobiles.

Enfin, chaque symbole débute par un intervalle de garde, qui permet de supprimer les pertes d'orthogonalité dues aux interférences intersymboles.

Un des avantages essentiels du système COFDM est que les récepteurs ne sont pas perturbés par les échos du signal reçus. Au contraire, ils en tirent avantage.

On rappelle en effet que ce système a été conçu notamment pour permettre la réception de signaux numériques dans des mobiles, même, et en particulier, dans des milieux de transmission particulièrement hostiles, tels que les milieux urbains.

Ainsi, le système COFDM fonctionne dans des canaux affectés de trajets multiples, dus à la présence d'obstacles naturels (édifices, arbres, véhicules, ...). De tels canaux peuvent être modélisés par une distribution de Rayleigh ou une distribution de Rice-Nagakami (si un trajet prédomine).

En d'autres termes, les récepteurs doivent comprendre des moyens de reconstitution des données numériques émises, compensant les problèmes dus aux perturbations, et notamment aux échos induits par le canal de transmission.

Dans le cas du système COFDM, ce résultat est atteint notamment grâce à l'entrelacement en temps et en fréquence (diversité en fréquence), à l'utilisation d'un codage convolutif et à la présence d'un intervalle de garde entre deux symboles de données consécutifs.

Dans un tel système de diffusion, l'existence de trajets multiples apparaît être en fait généralement un avantage, les récepteurs prenant en compte et exploitant les contributions correspondant à chacun de ces trajets.

Cette caractéristique avantageuse permet par ailleurs la mise en oeuvre de réseaux de diffusion monofréquences, c'est-à-dire de réseaux comprenant des émetteurs cocanaux, émettant tous sur la même fréquence de modulation, chaque émetteur étant vu comme un écho.

Il convient de bien faire la distinction entre les termes "multiporteuse" et "monofréquence", qui ne s'appliquent pas à la même phase de traitement du signal à émettre.

Le signal multiporteuse (27 ; fig.2) correspond au signal utile en bande de base, qui est constitué d'une pluralité de porteuses (32 ; fig.3) modulées chacune par un élément de données. Ce signal en bande de base est ensuite transposé dans le domaine des radiofréquences (28), par multiplication par une fréquence d'émission radiofréquence, en vue de son émission. Le système est dit monofréquence parce que chaque émetteur (chaque borne) utilise la même fréquence d'émission.

Le principe des réseaux monofréquences revient à générer des échos actifs (interprétés comme des échos naturels), à partir d'un ensemble de bornes réparties sur la surface d'une cellule.

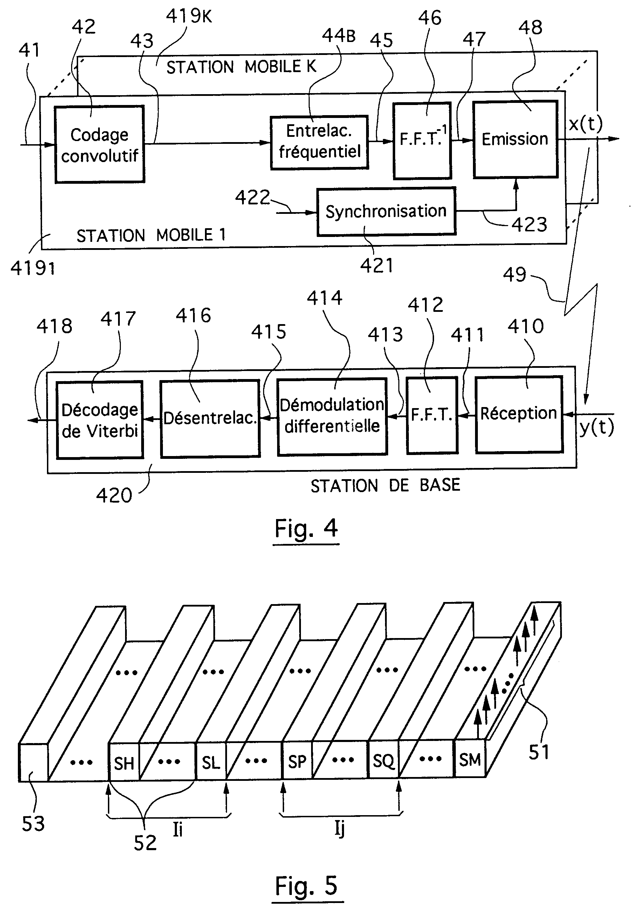

La figure 4 présente la chaîne de transmission de données dans le sens montant. Elle présente de nombreux points communs avec la chaîne de transmission dans le sens descendant de la figure 2, mais également certaines spécificités, dues au fait que plusieurs stations mobiles $419_1$ à $419_K$ peuvent émettre vers une seule station de base, celle-ci gérant simultanément plusieurs communications.

Plus précisément, la partie réception, dans la station de base 420, est tout à fait similaire à celle effectuée dans la station mobile 220 de la figure 2. La constitution et le fonctionnement des éléments 410 à 417 ne sont donc pas repris. On se reportera aux éléments correspondants 210 à 217.

Dans la station mobile 419, le fonctionnement est modifié sensiblement, du fait de l'utilisation d'une répartition AMRT.

Après un codage convolutif 42 des données source 41 (identique au codage 22), les données codées 43 sont soumises à un entrelacement en fréquence $44_B$. En revanche, ces données ne sont pas entrelacées temporellement (contrairement au signal descendant).

Cela peut se traduire par une légère perte au niveau de la robustesse, mais s'avère nécessaire du fait que l'on fonctionne en ARMT : chaque station mobile $419_i$ fonctionnant seulement sur un petit laps de temps (voir figure 5), l'entrelacement temporel tel qu'il est mis en oeuvre dans le module $24_A$ ne peut pas être mis en oeuvre. Un entrelacement temporel particulier peut toutefois être envisagé, mais limité au nombre de symboles constituant chaque intervalle d'une trame AMRT.

Les données 45 entrelacées en fréquence sont ensuite transformées à l'aide d'une FFT$^{-1}$ 46 (identique à la FFT$^{-1}$ 26), puis émises à l'aide du module d'émission 48. Ce module 48 effectue les mêmes fonctions que le module 28, mais uniquement durant l'intervalle de temps qui est alloué à la station mobile considérée. Il est donc contrôlé par des moyens de synchronisation 421.

Ainsi, parmi les données reçues et décodées (figure 2), chaque station mobile $419_i$ extrait des données de synchronisation 422. Après analyse de ces données 422, les moyens de synchronisation 421 délivrent au module d'émission 48 des autorisations d'émission 423, lors des instants d'émission alloués à la station.

La figure 5 présente un exemple de trame de symboles telle que reçue par la station de base.

La trame est découpée en intervalle de temps (ou "slots" en anglo-saxon) $I_i$ (SH à SL), $I_j$ (SP à SQ), chaque intervalle étant alloué à une station mobile.

Avantageusement, chaque intervalle commence par un symbole de synchronisation (ainsi, chaque mobile émet son propre symbole de synchronisation). Ce symbole de synchronisation peut également servir de référence de démodulation (de même que le symbole S2 déjà décrit), et de référence de gain (chaque mobile étant reçu par la station de base avec des puissances variables).

Dans un mode de réalisation simplifié, l'allocation des intervalles est fixe : l'intervalle $I_i$ est systématiquement affecté à la station mobile i. Dans ce cas, cette station mobile connaît l'emplacement de cet intervalle dans la trame (par exemple sous la forme d'un délai à appliquer après réception des symboles de synchronisation S1 et S2). Les données de synchronisation 422 correspondent donc aux symboles S1 et S2.

Avantageusement, cette allocation est dynamique : la station de base alloue des intervalles en fonction des besoins (c'est-à-dire lorsqu'une communication est demandée). Dans ce cas, au moins certaines des trames émises par la station de base portant un descripteur de l'allocation.

Un canal de cette trame (formé d'un ou plusieurs symboles) porte ce descripteur, dans un format connu des stations mobiles. Il fait partie des données de synchronisation 422 prises en compte par les moyens de synchronisation 421.

De façon avantageuse, il s'agit du premier canal de la trame. Ainsi, les stations mobiles pour lesquelles aucune communication n'est en cours peuvent fonctionner de façon intermittente. Elles se mettent hors veille peu avant le début de la trame (symbole de synchronisation), puis retourne en veille si le canal descripteur ne porte pas d'information les concernant.

Pour simplifier encore les traitements, ce descripteur peut débuter par un indicateur de changement d'allocation. Tant que cet indicateur conserve une valeur déterminée, les stations mobiles savent que l'allocation n'a pas varié.

La trame reçue (figure 5) par la station de base comprend un symbole (ou un canal) 53 dans lequel l'ensemble des stations mobiles peuvent émettre des demandes de communications. Un mécanisme particulier gère les éventuelles collisions entre deux demandes simultanées (par exemple par une demande de répétition dans le descripteur de l'allocation, ou par répétition à intervalles de temps réguliers ou aléatoires, jusqu'à ce que l'allocation correspondante apparaisse dans le descripteur).

Chaque intervalle $I_i$ ou $I_j$ peut comprendre un ou plusieurs symboles. Toutefois, si une démodulation différentielle (414) est mise en oeuvre, chaque intervalle doit comprendre au moins deux symboles, le premier (SQ, SP) étant un symbole de référence de démodulation connue de la station de base.

Le nombre de symboles par intervalles peut être fixe ou variable. Il peut par exemple dépendre des éléments suivants :

- niveau de qualité ou de priorité de la station mobile (une station de haute qualité nécessitant un débit plus important) ;
- type de la station mobile (réception de parole et/ou de données);
- nombre de communications en cours (optimisation de l'occupation de la trame ...).

D'autres types de répartition des données peuvent bien sûr être envisagées. Par exemple, les stations mobiles peuvent mettre en oeuvre une FFT partielle, les éléments de données étant répartis de façon adéquate sur les fréquences porteuses correspondantes par la station de base.

Chaque symbole débute toujours par un intervalle de garde 52, qui permet d'absorber l'interférence intersymbole et les écarts de temps de transmission entre deux stations mobiles.

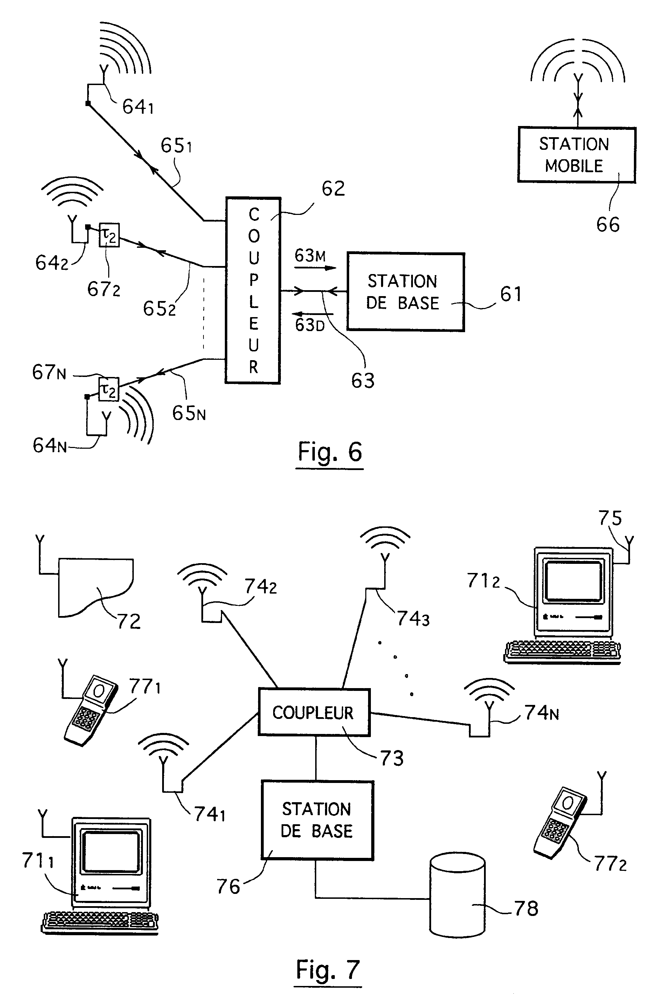

On présente maintenant la structure de l'ensemble d'émission/réception formé par la station de base et les bornes associées, en relation avec la figure 6.

Une station de base 61 (comprenant notamment les éléments contenus dans les blocs 219, figure 2 et 420, figure 4) est connecté à un coupleur 62, par une liaison bidirectionnelle 63. (Ce coupleur peut également faire partie intégrante de la station de base).

Ce coupleur a pour rôle fonctionnel :

- dans le sens descendant, de présenter le même signal à l'entrée de chacune des liaisons de distribution ;
- dans le sens montant, de réaliser la somme des signaux présents sur les entrées, c'est-à-dire la somme des signaux physiquement présents à l'entrée, côté bornes, des liaisons de distribution, ces dernières devant être transparentes au sens radioélectrique, à une transposition de fréquence près.

Le coupleur 62 est lui-même relié à plusieurs bornes radio bidirectionnelles $64_1$ à $64_N$, par l'intermédiaire d'autant de liaisons de distribution $65_1$ à $65_N$.

Ces liaisons bidirectionnelles 63 et $65_1$ à $65_N$ peuvent par exemple être des câbles coaxiaux ou optiques, de façon à former un réseau en étoile, ou en arbre (l'arborescence pouvant éventuellement présenter plusieurs niveaux).

Dans un autre mode de réalisation, il peut s'agir de liaisons hertziennes.

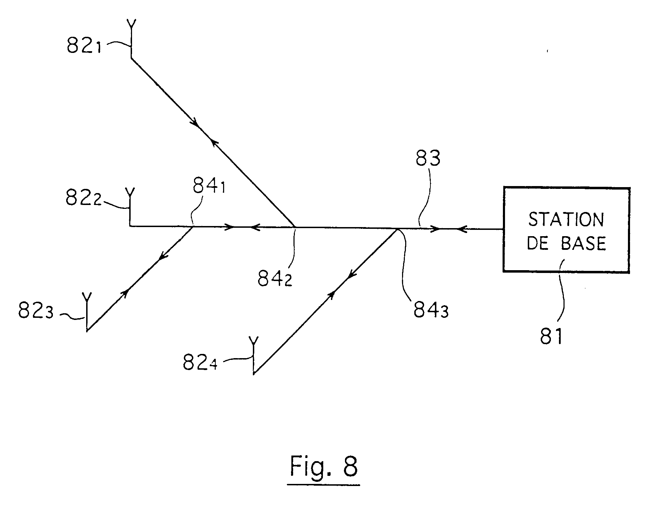

Il est à noter que le coupleur peut tout à fait ne pas avoir d'existence physique, ou être réparti (coupleur "diffus"). La figure 8 illustre une telle situation : la station de base 81 est reliée aux bornes $82_1$ à $82_4$ par un réseau 83 coaxial en arbre. Dans cette architecture le coupleur est réparti entre les points de connexion $84_1$ à $84_3$.

Dans la figure 6, le coupleur 62 joue le rôle classique de combineur, dans le sens montant, et de diviseur, dans le sens descendant. Ainsi, le signal reçu $63_M$ par la station de base 61 correspond à la combinaison des signaux reçus du mobile 66 par chacune des bornes $64_1$ à $64_N$. Inversement, le signal transmis $63_D$ par la station de base 61 est émis par l'ensemble des bornes $64_1$ à $64_N$.

De cette façon :

- dans le sens montant, la station de base 61 bénéficie des avantages de la diversité d'espace en réception : les puissances reçues par chacune des bornes se combinent (sous certaines conditions rappelées par la suite) d'une part, et un signal est reçu même lorsqu'une antenne est masquée ou soumise à un évanouissement;
- dans le sens descendant, le mobile 66 bénéficie des avantages des réseaux monofréquence : la puissance du signal est distribuée sur l'ensemble de la zone de couverture, de façon que le masquage de certaines bornes ne compromette pas la réception.

Chaque borne $64_1$ à $64_N$ comprend classiquement un amplificateur bidirectionnel, un filtre d'émission et un filtre de réception, et une antenne bidirectionnelle.

Avantageusement, on associe également à chaque borne un retard distinct $\tau_i$ $67_2$ à $67_N$.

En effet, la diversité d'espace peut, dans certaines conditions, poser des problèmes. Ainsi, dans le sens montant, si deux antennes délivrent le même signal au coupleur 62 avec un écart très faible, inférieur à la résolution en temps de la station de base (c'est-à-dire à la capacité de discrimination entre deux composantes fréquentielles successives, ou encore sensiblement à l'inverse de la bande passante du signal), les composantes des deux signaux vont se combiner en une seule composante. Dans certains cas (notamment lorsque les contributions sont de puissance similaire et de phase opposée), la résultante est très atténuée, voire nulle.

En revanche, si l'écart est supérieur à la résolution de la station de base, les deux composantes sont considérées comme des échos, qu'un récepteur COFDM sait traiter.

Le même problème peut se poser dans le sens descendant, les signaux émis pouvant se combiner de la même façon, et conduire à des évanouissements, notamment dans les zones où il n'y a pas, ou peu d'écho.

Pour pallier cet inconvénient, on utilise donc des retards $67_2$ à $67_N$, tel que cela a déjà été présenté dans la demande de brevet française FR 90 11192, dans le cadre sensiblement différent (car monodirectionnel) de la radiodiffusion.

Ces retards sont choisis de façon que l'écart en deux quelconques d'entre eux soit supérieur à la résolution en temps $T_R$ du récepteur :

$$\tau_i - \tau_j > T_R \qquad \text{pour i,j } \varepsilon \text{ [1,N], i} \neq \text{j)}$$

soit environ :

$$\tau_i - \tau_j > 1/B$$

B étant la largeur de la bande du signal transmis.

On prendra par exemple :

$$\tau_i = (i - 1) . \tau \qquad \text{pour i } \varepsilon \text{ [1,N]}$$

avec $\tau = 1/B$ .

Une autre contrainte sur ces retards est que le cumul de ceux-ci (c'est-à-dire $(i - 1) . \tau$) doit être inférieur au retard maximum que les stations de base et les stations mobiles sont capables de gérer.

Ces retards peuvent également être variables dans le temps, ainsi que cela est décrit dans la demande de brevet FR 92 11360 (non publiée).

Ainsi qu'on l'a déjà mentionné, la présente invention n'est pas limitée aux radiocommunications téléphoniques cellulaires. Au contraire, de nombreuses autres applications peuvent être envisagées, notamment du fait que la technique COFDM offre le double avantage d'un débit important et d'une grande robustesse.

La figure 7 présente une telle application particulière aux réseaux locaux.

De façon classique, un réseau local d'entreprise permet de connecter entre eux une pluralité de terminaux informatiques $71_1$, $71_2$, de façon que ceux-ci puissent échanger des données et/ou partager des périphériques (imprimante 72, par exemple).

Le système de l'invention permet de réaliser un tel réseau, sans câblage (sinon, éventuellement, celui entre le coupleur 73 et les bornes d'émission/réception $74_1$ à $74_N$). Ainsi, l'ajout d'un nouvel élément $71_2$ dans le réseau est très simple : il suffit de lui fournir des moyens d'émission/réception 75, et de déclarer son existence à la station de base 76.

Outre les échanges de données, le système peut gérer simultanément d'autres types de communications, tels que des communications téléphoniques entre des postes téléphoniques $77_1$, $77_2$. A nouveau, aucun câblage n'est nécessaire et ces postes peuvent être déplacés, même en cours de communication.

La station de base 76 contrôle ces différentes communications. Elle peut de plus gérer l'émission de données particulières (système de radiomessagerie, diffusion d'images animées ou non, ...). Elle peut également contrôler un serveur de données 78.

D'autres applications de ce type apparaîtront directement à l'homme du métier, en fonction du type de secteur à couvrir (ville, quartier, salon, entreprise, hôpital, ensemble de bureaux, hôtel, ...).

**Revendications**

1. Système de radiocommunication numérique bidirectionnel entre au moins une station mobile ($15_i$ ; 220 ; $419_i$ ; 66 ; 71i, 72, $77_i$) et au moins une station de base ($12_i$ ; 219; 420; 61; 76; 81), caractérisé en ce que chacune desdites stations mobiles ($15_i$) comprend :

   - des premiers moyens (42, $44_B$, 46) de codage canal délivrant une première série de premiers symboles de données successifs , chacun desdits premiers symboles de données étant formé d'une pluralité (51) de fréquences porteuses orthogonales modulées chacune par un élément de données d'un premier signal source, et
   - des premiers moyens (48) d'émission assurant la modulation desdits premiers symboles de données à une première fréquence de modulation ($f_1$) et la diffusion des symboles modulés à l'aide d'au moins une première antenne;

   en ce que chacune desdites stations de base ($12_i$) comprend :

   - des seconds moyens (22, 24, 26) de codage canal délivrant une seconde série de seconds symboles de données successifs , chacun desdits seconds symboles de données étant formé d'une pluralité de fréquences (31) porteuses orthogonales modulées chacune par un élément de données d'un second signal source, et
   - des seconds moyens (28) d'émission assurant la modulation desdits seconds symboles de données à une seconde fréquence de modulation ($f_2$);

   et en ce que chacune desdites stations de base ($12_i$ ; 61; 76 ; 81) coopère avec au moins des bornes ($13_i$ ; $64_i$ ; $74_i$ ; $82_i$) d'émission et de réception hertziennes spatialement réparties, chacune desdites bornes étant reliée de façon bidirectionnelle à ladite station de base,
   de façon qu'un signal issu de ladite station de base soit émis vers lesdites stations mobiles par chacune desdites bornes, et qu'un signal reçu par ladite station de base corresponde à la somme des signaux reçus par chacune desdites bornes.

2. Système selon la revendication 1, caractérisé en ce que ledit signal reçu par ladite station de base ($12_i$ ; 61; 76; 81) est organisé en trames successives comprenant chacune un nombre prédéterminé de premiers symboles de données, chaque trame étant découpée en intervalles de temps ($I_i$) comprenant chacun au moins un symbole de données,
   et en ce qu'il est affecté à chacun desdits mobiles ($15_i$ ; 220 ; $419_i$ ; 66 ; $71_i$, 72, $77_i$) au moins un intervalle de temps ($I_i$), ledit mobile n'émettant des données que durant les intervalles de temps qui lui sont affectés.

3. Système selon l'une quelconque des revendications 1 et 2, caractérisé en ce que ledit signal issu de chacune desdites stations de base ($12_i$ ; 61 ; 76 ; 81) comprend des données de synchronisation (S1, S2 ; 422), et en ce que chacun desdits mobiles ($15_i$ ; 220 ; $419_i$ ; 66 ; $71_i$, 72, $77_i$) comprend des moyens (421) de contrôle de l'instant d'émission (423) desdits premiers symboles, en fonction desdites données de synchronisation (422).

4. Système selon l'une quelconque des revendications 1 à 3, caractérisé en ce qu'un intervalle de garde (32 ; 52) est ménagé entre chacun desdits premiers symboles de données, de façon à absorber les écarts de synchronisation entre deux stations mobiles.

5. Système selon l'une quelconque des revendications 1 à 4, caractérisé en ce que lesdits seconds moyens (22, 24, 26) de codage canal effectuent un entrelacement en temps ($24_A$) et en fréquence ($24_B$) desdits éléments de données dudit second signal source,
   et en ce que lesdits premiers moyens (42, $44_B$, 46) de codage canal effectuent un entrelacement uniquement en fréquence ($44_B$) desdits éléments de données dudit premier signal source.

6. Système selon l'une quelconque des revendications 2 à 5, caractérisé en ce que chacun desdits intervalles de temps ($I_i$) comprend une série d'au moins deux premiers symboles de données consécutifs, et en ce que le premier symbole de ladite série est un symbole de référence de démodulation, permettant d'effectuer dans une station de base une démodulation différentielle des symboles suivant de ladite série.

7. Système selon l'une quelconque des revendications 1 à 6, caractérisé en ce que lesdites bornes (64i) d'émission et de réception sont implantées de façon que les durées de transmission d'un signal entre chacune desdites bornes et la station de base associée soient différentes.

8. Système selon la revendication 7, caractérisé en ce que l'écart entre deux desdites durées de transmission est supérieur à l'inverse de la largeur de bande du signal émis par lesdites stations mobiles.

9. Station mobile pour un système de radiocommunication numérique bidirectionnel entre au moins une station mobile ($15_i$ ; 220 ; $419_i$ ; 66 ; $71_i$ ; 72 ; $77_i$) et au moins une station de base ($12_i$ ; 219 ; 420 ; 61 ; 76 ; 81) tel que définit dans l'une quelconque des revendications 1 à 8, caractérisée en ce que la station mobile comprend :

   - des premiers moyens (42, $44_B$, 46) de codage canal délivrant une première série de premiers symboles de données successifs, chacun desdits premiers symboles de données étant formé d'une pluralité (51) de fréquences porteuses orthogonales modulées chacune par un élément de données d'un premier signal source, et
   - des premiers moyens (48) d'émission assurant la modulation desdits premiers symboles de données à une première fréquence de modulation ($f_1$) et la diffusion des symboles modulés à l'aide d'au moins une première antenne.

10. Station de base pour un système de radiocommunication numérique bidirectionnel entre au moins une station mobile ($15_i$ ; 220 ; $419_i$ ; 66 ; $71_i$ ; 72 ; $77_i$) et au moins une station de base ($12_i$ ; 219 ; 420 ; 61 ; 76 ; 81) tel que définit dans l'une quelconque des revendications 1 à 8, caractérisée en ce que la station de base comprend :

   - des seconds moyens (22, 24, 26) de codage canal délivrant une seconde série de seconds symboles de données successifs, chacun desdits seconds symboles de données étant formé d'une pluralité de fréquences (31) porteuses orthogonales modulées chacune par un élément de données d'un second signal source, et
   - des seconds moyens (28) d'émission assurant la modulation desdits seconds symboles de données à une seconde fréquence de modulation ($f_2$);

   et en ce qu'elle coopère avec au moins deux bornes (13i ; 64i ; 74i ; 82i) d'émission et de réception hertziennes spatialement réparties, chacune desdites bornes étant reliée de façon bidirectionnelle à ladite station de base, de façon qu'un signal issu de ladite station de base soit émis vers lesdites stations mobiles par chacune desdites bornes, et qu'un signal reçu par ladite station de base corresponde à la somme des signaux reçus par chacune desdites bornes.

**Claims**

1. System for bidirectional digital radio communication between at least one mobile station ($15_i$; 220, $419_i$; 66; $71_i$, 72, $77_i$) and at least one base station ($12_i$; 219; 420; 61; 76; 81), characterized in that each of the said mobile stations ($15_i$) comprises:

   - first means (42, $44_B$, 46) of channel coding delivering a first series of first successive data symbols, each of the said first data symbols being formed of a plurality (51) of orthogonal carrier frequencies each modulated by a data element of a first source signal, and
   - first means (48) of transmission ensuring the modulation of the said first data symbols at a first modulation frequency ($f_1$) and the broadcasting of the modulated symbols with the aid of at least a first antenna;

   in that each of the said base stations ($12_i$) comprises:

   - second means (22, 24, 26) of channel coding delivering a second series of second successive data symbols, each of the said second data symbols being formed of a plurality of orthogonal carrier frequencies (31) each modulated by a data element of a second source signal, and
   - second means (28) of transmission ensuring the modulation of the said second data symbols at a second modulation frequency ($f_2$);

   and in that each of the said base stations ($12_i$; 61; 76; 81) cooperates with at least two spatially distributed hertzian transmission and reception units (13i; 64i; 74i; 82i), each of the said units being linked in a bidirectional manner to the said base station,

in such a way that a signal emanating from the said base station is transmitted to the said mobile stations by each of the said units, and that a signal received by the said base station corresponds to the sum of the signals received by each of the said units.

2. System according to Claim 1, characterized in that the said signal received by the said base station ($12_i$; 61; 76; 81) is organized as successive frames each comprising a predetermined number of first data symbols, each frame being partitioned into time intervals ($I_i$) each comprising at least one data symbol, and in that at least one time interval ($I_i$) is assigned to each of the said mobiles (15; 220; $419_i$; 66; $71_i$, 72, $77_i$), the said mobile transmitting data only during the time intervals assigned to it.

3. System according to either one of Claims 1 and 2, characterized in that the said signal emanating from each of the said base stations ($12_i$; 61; 76; 81) comprises synchronization data (S1, S2; 422), and in that each of the said mobiles (15; 220; $419_i$; 66; $71_i$, 72, $77_i$) comprises means (421) for controlling the instant of transmission (423) of the said first symbols, as a function of the said synchronization data (422).

4. System according to any one of Claims 1 to 3, characterized in that a guard interval (32; 52) is contrived between each of the said first data symbols, so as to absorb the synchronization gaps between two mobile stations.

5. System according to any one of Claims 1 to 4, characterized in that the said second means (22, 24, 26) of channel coding perform a time ($24_A$) and frequency ($24_B$) interleaving of the said data elements of the said second source signal, and in that the said first means (42, $44_B$, 46) of channel coding perform a frequency - only interleaving ($44_B$) of the said data elements of the said first source signal.

6. System according to any one of Claims 2 to 5, characterized in that each of the said time intervals ($I_i$) comprises a series of at least two first consecutive data symbols, and in that the first symbol of the said series is a demodulation reference symbol, making it possible to perform in a base station a differential demodulation of the symbols following of the said series.

7. System according to any one of Claims 1 to 6, characterized in that the said transmission and reception units (64i) are installed in such a way that the durations of transmission of a signal between each of the said units and the associated base station are different.

8. System according to Claim 7, characterized in that the gap between two of the said durations of transmission is greater than the inverse of the bandwidth of the signal transmitted by the said mobile stations.

9. Mobile station for a system for bidirectional digital radio communication between at least one mobile station (15; 220; $419_i$; 66; $71_i$; 72; $77_i$) and at least one base station ($12_i$; 219; 420; 61; 76; 81) as defined in any one of the claims, characterized in that the mobile station comprises:

   - first means (42, $44_B$, 46) of channel coding delivering a first series of first successive data symbols, each of the said first data symbols being formed of a plurality (51) of orthogonal carrier frequencies each modulated by a data element of a first source signal, and
   - first means (48) of transmission enduring the modulation of the said first data symbols at a first modulation frequency ($f_1$) and the broadcasting of the modulated symbols with the aid of at least a first antenna.

10. Base station for a system for bidirectional digital radio communication between at least one mobile station (15; 220; $419_i$; 66; $71_i$; 72; $77_i$) and at least one base station ($12_i$; 219; 420; 61; 76; 81) as defined in any one of the claims, characterized in that the base station comprises:

   - second means (22, 24, 26) of channel coding delivering a second series of second successive data symbols, each of the said second data symbols being formed of a plurality of orthogonal carrier frequencies (31) each modulated by a data element of a second source signal, and
   - second means (28) of transmission ensuring the modulation of the said second data symbols at a second modulation frequency ($f_2$);

and in that the base station cooperates with at least two spatially distributed hertzian transmission and reception units (13; $64_i$; $74_i$; $82_i$), each of the said units being linked in a bidirectional manner to the said base station,

in such a way that a signal emanating from the said base station is transmitted to the said mobile stations by each of the said units, and that a signal received by the said base station corresponds to the sum of the signals received by each of the said units.

## Patentansprüche

1. Digitale Funkübertragungsanordnung in zwei Richtungen zwischen mindestens einer mobilen Station ($15_i$; 220; $419_i$; 66, $71_i$, 72, 77 $_i$) und mindestens einer Basisstation ($12_i$; 219; 420; 61; 76; 81), dadurch gekennzeichnet, daß jede der mobilen Stationen (15 $_i$) folgendes umfaßt:

   - erste Mittel (42, $44_B$, 46) zur Kanalkodierung, die eine erste Reihe von ersten aufeinanderfolgenden Datensymbolen liefert, wobei jedes dieser ersten Datensymbole aus einer Vielzahl (51) orthogonaler Trägerfrequenzen gebildet wird, die jeweils durch ein Datenelement eines ersten Quellensignals moduliert werden und
   - erste Sendemittel (48), welche das Modulieren dieser ersten Datensymbole mit einer ersten Modulationsfrequenz ($f_1$) sowie das Senden der modulierten Symbole mit Hilfe von mindestens einer ersten Antenne sicherstellt;

   und, daß jede der Basisstationen (12 $_i$) folgendes umfaßt:

   - zweite Mittel (22, 24, 26) zur Kanalkodierung, die eine zweite Reihe von zweiten aufeinanderfolgenden Datensymbolen liefert, wobei jedes dieser zweiten Datensymbole aus einer Vielzahl orthogonaler Trägerfrequenzen (31) gebildet wird, die jeweils durch ein Datenelement eines zweiten Quellensignals moduliert werden und
   - zweite Sendemittel (28), welche das Modulieren dieser zweiten Datensymbole mit einer zweiten Modulationsfrequenz ($f_2$) sicherstellen;

   und, daß jede der Basisstationen ($12_i$; 61; 76; 81) mit mindestens zwei Sende- und Empfangsquellen ($13_i$; $64_i$; $74_i$; $82_i$) für Funksignale zusammenwirkt, die räumlich verteilt sind, wobei jede dieser Quellen derart in zwei Richtungen mit der Basisstation verbunden ist, daß ein von der Basisstation kommendes Signal von jeder der Quellen zu den mobilen Stationen gesendet wird und, daß ein von der Basisstation empfangenes Signal der Summe der von jedem der Quellen empfangenen Signale entspricht.

2. Anordnung gemäß Anspruch 1, dadurch gekennzeichnet, daß das von der Basisstation ($12_i$; 61; 76; 81) empfangene Signal nach aufeinanderfolgenden Rastern organisiert ist, die jeweils eine vorgegebene Zahl erster Datensymbole umfassen, wobei jedes Raster in Zeitintervalle ($I_i$) unterteilt ist, die jeweils mindestens ein Datensymbol umfassen und, daß jeder der mobilen Stationen ($15_i$; 220; $419_i$; 66; $71_i$, 72, $77_i$) mindestens einem Zeitintervall ($I_i$) zugeordnet wird, wobei die mobile Station nur während der ihr zugeordneten Zeitintervalle Daten sendet.

3. Anordnung gemäß einem der Ansprüche 1 oder 2, dadurch gekennzeichnet, daß das aus einer jeden der Basisstationen ($12_i$; 61; 76; 81) ausgehende Signal Synchronisierungsdaten (S1, S2; 422) umfaßt und, daß jede der mobilen Stationen ($15_i$; 220; $419_i$; 66; $71_i$, 72, $77_i$) Mittel (421) zum Steuern des Sendezeitpunktes (423) des ersten Symbols als Funktion der Synchronisierungsdaten (422) umfaßt.

4. Anordnung gemäß einem der Ansprüche 1 bis 3, dadurch gekennzeichnet, daß ein Schutzintervall (32; 52) zwischen allen ersten Datensymbolen eingelegt wird, um die Synchronisationsabstände zwischen zwei mobilen Stationen aufzunehmen.

5. Anordnung gemäß einem der Ansprüche 1 bis 4, dadurch gekennzeichnet, daß die zweiten Mittel (22, 24, 26) zur Kanalkodierung eine Verschachtelung nach Zeit ($24_A$) und Frequenz ($24_B$) dieser Datenelemente des zweiten Quellensignals bewirken und, daß die ersten Mittel (42, $44_B$, 46) zur Kanalkodierung nur eine Verschachtelung nach der Frequenz ($44_B$) der Datenelemente des ersten Quellensignals bewirken.

6. Anordnung gemäß einem der Ansprüche 2 bis 5, dadurch gekennzeichnet, daß jedes der Zeitintervalle ($I_i$) eine Reihe von mindestens zwei aufeinanderfolgende erste Symbole umfaßt und, daß das erste Symbol dieser Reihe ein Referenzsymbol für das Demodulieren ist, mit dem in einer Basisstation eine differentielle Demodulierung der nachfolgenden Symbole der Reihe zu bewirken ist.

**7.** Anordnung gemäß einem der Ansprüche 1 bis 6,
dadurch gekennzeichnet, daß die Sende- und Empfangsquellen ($64_i$) so eingesetzt sind, daß die Übertragungszeiten eines Signals zwischen jedem dieser Quellen und der jeweils zugeordneten Basisstation stets verschieden voneinander sind.

**8.** Anordnung gemäß Anspruch 7,
dadurch gekennzeichnet, daß der Abstand zwischen zwei Sendezeiträumen größer ist, als der Kehrwert der Bandbreite des von den mobilen Stationen gesendeten Signals.

**9.** Mobile Station für eine digitale Funkübertragungsanordnung in zwei Richtungen zwischen mindestens einer mobilen Station ($15_i$; 220; $419_i$; 66, $71_i$, 72, $77_i$) und mindestens einer Basisstation ($12_i$; 219; 420; 61; 76; 81) wie in einem der Ansprüche definiert,
dadurch gekennzeichnet, daß sie folgendes umfaßt:

- erste Mittel (42, $44_B$, 46) zur Kanalkodierung, die eine erste Reihe von ersten aufeinanderfolgenden Datensymbolen liefert, wobei jedes dieser ersten Datensymbole aus einer Vielzahl (51) orthogonaler Trägerfrequenzen gebildet wird, die jeweils durch ein Datenelement eines ersten Quellensignals moduliert werden und
- erste Sendemittel (48), welche das Modulieren dieser ersten Datensymbole mit einer ersten Modulationsfrequenz ($f_1$) sowie das Senden der modulierten Symbole mit Hilfe von mindestens einer ersten Antenne sicherstellt.

**10.** Basisstation für eine digitale Funkübertragungsanordnung in zwei Richtungen zwischen mindestens einer mobilen Station ($15_i$; 220; $419_i$; 66, $71_i$, 72, $77_i$) und mindestens einer Basisstation ($12_i$; 219; 420; 61; 76; 81) wie in einem der Ansprüche definiert, dadurch gekennzeichnet, daß die Basisstation folgendes umfaßt:

- zweite Mittel (22, 24, 26) zur Kanalkodierung, die eine zweite Reihe von zweiten aufeinanderfolgenden Datensymbolen liefert, wobei jedes dieser zweiten Datensymbole aus einer Vielzahl orthogonaler Trägerfrequenzen (31) gebildet wird, die jeweils durch ein Datenelement eines zweiten Quellensignals moduliert werden und
- zweite Sendemittel (28), welche das Modulieren dieser zweiten Datensymbole mit einer zweiten Modulationsfrequenz ($f_2$) sicherstellen;

und, daß sie mit mindestens zwei Sende- und Empfangsquellen ($13_i$; $64_i$; $74_i$; $82_i$) für Funksignale zusammenwirkt, die räumlich verteilt sind, wobei jede dieser Quellen derart in zwei Richtungen mit der Basisstation verbunden ist, daß ein von der Basisstation kommendes Signal von jeder der Quellen zu den mobilen Stationen gesendet wird und, daß ein von der Basisstation empfangenes Signal der Summe der von den Quellen empfangenen Signale entspricht.

Fig. 1

Fig. 2

Fig. 3

Fig. 4

Fig. 5

Fig. 6

Fig. 7

Fig. 8